# EUROPEAN PATENT APPLICATION

(11) **EP 3 388 216 A1**
(43) Date of publication of application: **17.10.2018**
(21) Application number: 17382204.0
(22) Date of filing: 14.04.2017
(51) Int. Cl.: B29C 33/38, B29C 33/40, B29C 33/42

(54) **COMPONENT WITH CUSTOM DESIGN FOR A LIGHTING DEVICE AND METHOD FOR PRODUCING THEREOF**

(71) Applicant: Valeo Iluminacion, 23600 Martos (ES)
(72) Inventor: MAYOR, Raquel, 23600 MARTOS (ES); SAN-JUAN, Daniel, 23600 MARTOS (ES)

(57) **Abstract**

A method (100, 200, 300) for producing a component for a lighting device of a motor vehicle, the component comprising at least one surface with a predetermined design (401, 423) provided thereon, the method (100, 200, 300) comprising: manufacturing (101) a master template (400, 420), the master template (400, 420) comprising at least one surface with the predetermined design (401, 423) provided thereon; producing (102) a mold (500, 520) from the master template (400, 420); and curing (103) a material in the mold (500, 520) thereby producing the component for the lighting device, the component comprising the at least one surface with the predetermined design (401, 423) provided thereon. Also, a component for a lighting device of a motor vehicle obtained with the method.

## Description

### TECHNICAL FIELD

The present invention relates to the field of lighting devices. More specifically, the invention relates to a method for producing a component with a custom or a predetermined design for a lighting device, particularly a lighting device of a motor vehicle, and the component obtained with the method.

### STATE OF THE ART

Most of the times, the visual appeal of motor vehicles plays an important role when a customer is determined to purchase a vehicle. This means that, in addition to the features a particular motor vehicle is provided with, the overall aesthetics of the motor vehicle are also taken into account by the customer.

Accordingly, carmakers invest in the design of motor vehicles so as to make them more eye-catching. Depending on the target market the carmaker is focusing on, the efforts put in the design of a motor vehicle and the parts or devices thereof may be more significant, something which is generally reflected on the final price of the motor vehicle.

Recently, the addition of customized components or elements to a motor vehicle is growing in popularity. Some customers are willing to pay more money for a vehicle having customized aesthetics that, in some cases, may even identify the owner thereof by simply looking at some details of the design. The customized components or elements, in turn, must be designed, produced and installed on the vehicle such that they meet the quality requirements expected by the customer.

The customized components or elements may be particularly suitable for lighting devices of automotive vehicles, and they may include designs with fine details that ultimately determine the manufacturing technique or process, if any, that may be used for their production. The designs may range from patterns to texts or logos with relief (either as protrusions, recesses, or both).

In some cases, the technique or process for manufacturing a customized component may require that the component is first manufactured with no customization whatsoever, and then apply the technique or process to the manufactured component so as to provide the customization; moreover, in some occasions, the component must be first integrated within the whole device prior to providing the customization. In both situations, the process generally becomes long and costly since it cannot be carried out in mass production, not even for small batches of several components: each component must be processed independently (for example machined or laser marked independently). An even worse situation would be when the customization cannot be provided with sufficient quality because no technique can apply a design to a component, for instance due to the limitation that the component must be first manufactured (and possibly also integrated within the entire device).

Therefore, ordering customized components or elements, even if the customization is somewhat mainstream (e.g. striped patterns, V-shaped patterns, etc.), is generally expensive for the customer, that is if it is possible at all.

Customization may be sought for lighting devices of a motor vehicle as the light that such devices produce may also be affected by the customized components or elements, thereby enhancing the aesthetic appeal of the vehicle.

Accordingly, there is an interest in providing a method for producing components or elements, particularly for a lighting device of an automotive vehicle, provided with one or more surfaces featuring a customized or predetermined design. It would also be desirable that the method may be carried out for series production so that the production of the components is cost-effective.

### DESCRIPTION OF THE INVENTION

A first aspect of the invention relates to a method for producing a component for a lighting device of a motor vehicle, the component comprising at least one surface with a predetermined design provided thereon, the method comprising: manufacturing a master template, the master template comprising at least one surface with the predetermined design provided thereon; producing a mold from the master template; and curing a material in the mold thereby producing the component for the lighting device, the component comprising the at least one surface with the predetermined design provided thereon.

In the context of the present disclosure, the term 'master' of 'master template' only denotes that it is the template used for producing the mold. It is clear that simply the term 'template' can be used instead of 'master template' without departing from the scope of the present disclosure.

The master template is manufactured as a piece from which a mold may be produced, the mold thus being useful for production in series of a component for a lighting device of a motor vehicle. As the master template features at least one surface with the predetermined design provided thereon, the mold produced is also provided with the predetermined design on at least one surface but with the complementary or negative geometry (e.g. the protrusions of the predetermined design of the master template are recesses in the predetermined design of the mold and vice versa). Upon curing the material in the mold, the component is manufactured with the predetermined design already provided therein, and hence the component does not require to have the predetermined design applied thereto after being manufactured.

The predetermined design may be, for example, a mainstream or standard design, that is, a design that allows differentiation between lighting devices but which is not a custom design of a customer (that may identify the customer), for example a pattern including polygonal shapes, a logo of the carmaker, a logo of a company sponsoring the vehicle, etc. The predetermined design may also be, for example, a custom design of the customer, for example the name of the customer, a particular logo that identifies the customer, etc. In both cases, the predetermined design (that the master template comprises on the at least one surface and that the component produced also comprises on the at least one surface) preferably comprises at least one protrusion, at least one recess, or a combination of at least one protrusion and at least one recess. Namely, the predetermined design preferably comprises relief (i.e. has a 3D geometry).

The method of the present disclosure allows producing components featuring such designs in a cost-effective manner since manufacturing a master template, producing a mold and producing the component from the mold may be less expensive than producing each component and applying the design thereto afterwards. Moreover, the method may enable the production of components with a predetermined design of a better quality and/or featuring finer details, and also the production in series of the components.

Depending on the material of the mold, production of more or fewer components may be possible before having to dispose of the mold and having to produce a new one for further production of components. As the mold is operated with (by curing material therein and withdrawing the components therefrom once produced), the overall shape and the surfaces of the mold lose detail or get deformed, therefore the components produced with the mold will feature a lower quality.

In some embodiments of the invention, manufacturing the master template comprises: manufacturing a first template and a second template; providing the predetermined design on at least one surface of the first template; and joining together the first template and the second template thereby producing the master template.

The master template may comprise a first template and a second template that are joined so that a mold may be produced. Forming the master template with two templates may be advantageous when the predetermined design of the component is only to be present in a portion of the component (e.g. a visible portion of a bezel that has a visible portion and a portion adapted to attach the bezel to the lighting device; the visible portion is the portion visible to people when the component is attached to the lighting device) rather than in an entirety of the component. This is so because the first template may correspond to the portion with the predetermined design, and providing the predetermined design on at least one surface of the first template may be simpler if it is done prior to joining the first and second templates. As a smaller template (with respect to the entire master template) has to be processed and less parts (e.g. protruding and/or L-shaped parts for attaching the component to the lighting device) may collide with any machine used for providing the design, manufacturing the master template becomes simpler. The second template may or may not comprise a design embedded therein, that is, the second template may or may not have at least one surface provided with a design thereon.

In some of these embodiments, the first template and the second template are manufactured with different manufacturing processes. Since the first template has the predetermined design provided on at least one of its surfaces, the first template may be manufactured with a first process (e.g. milling, stereolithography, etc.) that permits embedding the predetermined design (for instance with a process such as machining or laser marking). Since the second template may not have any design provided on any of its surfaces, the second template may be manufactured with a second process (e.g. milling, stereolithography, etc.) different from the first process as a less detailed structure is expected, thus a more simple manufacturing process may be used and thereby decrease the overall cost of producing the component. In some other embodiments, the first template and the second template are manufactured with the same process.

In some embodiments of the invention, manufacturing the master template comprises: manufacturing at least three templates; providing the predetermined design on at least one surface of at least one of the at least three templates; and joining together the at least three templates thereby producing the master template.

In some embodiments of the invention, manufacturing the master template comprises: manufacturing the master template; and providing the predetermined design on the at least one surface of the master template. The master template is manufactured as a single piece with a manufacturing process like, for example but without limitation, milling or an additive manufacturing process such as stereolithography. The predetermined design is applied to at least one surface of the master template once the master template has been manufactured. Accordingly, the master template may be first manufactured without the predetermined design embedded therein, and then the predetermined design is embedded in or provided on the at least one surface of the master template so that a mold produced from the master template also features the predetermined design.

In some embodiments, providing the predetermined design on the at least one surface comprises machining or laser marking the predetermined design in the at least one surface. The predetermined design may be applied to at least one surface of the master template (in the embodiments in which the master template is manufactured as a single piece) or the first template (in the embodiments in which the master template, namely the template for producing a mold, is manufactured by joining first and second templates or by joining at least three templates) with a machining process or a laser marking process. Both processes may apply the design to the surface/s accurately and, as such, the design may feature drawings, patterns, and/or text, for example, with fine details.

In some embodiments, the predetermined design (that the master template comprises on the at least one surface and that the component produced also comprises on the at least one surface) comprises one of: a plurality of prisms, a plurality of pillows, a grained surface, and a combination thereof. In some embodiments, the predetermined design on the at least one surface of the master template and/or the component comprises one of: a logo, text, and a combination thereof.

In some embodiments, the component is one of: a lamp housing, a lamp cover, a lens, a screen, a bezel, and a filter. When the component is an optical element, for instance a lamp housing, a lamp cover, a lens, a screen or a filter, the component (particularly the at least one surface with the predetermined design) may modify a way in which the lighting device provides light, particularly the at least one surface with the predetermined design. In some cases, the component is a decorative component for the lighting device, for example when the component is a bezel. In this sense, the component may not serve any other purpose than decorating the lighting device, that is, the component does not affect how the light of the lighting device is provided.

In some embodiments, the master template comprises a metallic material, for example but without limitation, aluminum, magnesium, steel, etc. and alloys thereof. In some other embodiments, the master template comprises a polymeric material or a plastic material, for example but without limitation, polyethylene, polypropylene, ABS, polyamide, PMMA, thermoplastic elastomers, and also resins suitable for stereolithography.

In some embodiments, the mold is a flexible mold. Preferably, the mold comprises a polymeric compound like, for example, silicone. A mold is regarded as flexible when its shore hardness D0 (after 24 hours at ambient temperature, as defined in ISO 868-2003) is less than 70, and is greater than 0. In some of these embodiments, the shore hardness D0 is smaller than 65 and greater than 20 so that the mold does not feature too much flexibility that may difficult the production of the component. Having a flexible mold may be advantageous for withdrawing the component once the material has been cured as a non-rigid mold may be subject to bending and/or twisting. This may also be advantageous when the component features a structure with negative draft that would otherwise impede withdrawing the component from the mold.

In some embodiments, the material cured comprises polyurethane.

A second aspect of the invention relates to a component for a lighting device of a motor vehicle obtained with a method according to the first aspect of the invention.

In some embodiments, the component is one of: a lamp housing, a lamp cover, a lens, a screen, a bezel, and a filter.

In some embodiments, the component is a decorative component for the lighting device.

A third aspect of the invention relates to a lighting device for a motor vehicle comprising a light source and a component according to the second aspect of the invention.

Similar advantages as those described for the first aspect of the invention may also be applicable to the second and third aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 illustrates a method in accordance with an embodiment of the invention.
Figure 2 illustrates a method in accordance with another embodiment of the invention.
Figure 3 illustrates a method in accordance with another embodiment of the invention.
Figures 4A-4B illustrate two master templates.
Figures 5A-5B illustrate two molds produced from the master templates of Figures 4A-4B.

### DESCRIPTION OF A WAY OF CARRYING OUT THE INVENTION

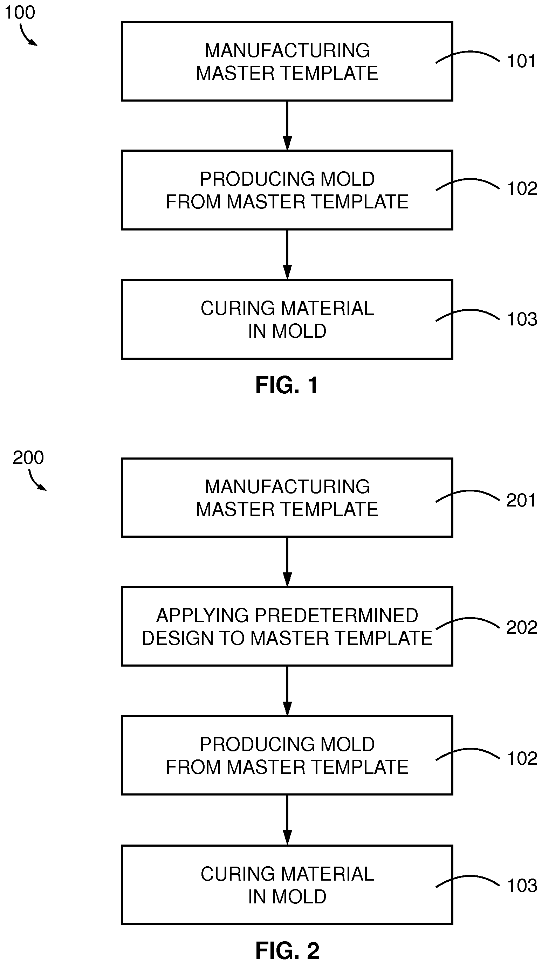

Figure 1 shows, in a block diagram form, a method 100 in accordance with an embodiment of the invention.

The method 100 comprises manufacturing 101 a master template corresponding to a component for a lighting device of a motor vehicle that is to be produced. The master template includes at least one surface (e.g. one surface, two surfaces, three surfaces, or even more surfaces) with a predetermined design provided thereon. In this embodiment, the master template is directly manufactured with the predetermined design already provided thereon, for example with a milling manufacturing process. The master template is a piece or a template from which a mold may be produced.

The method 100 also comprises producing 102 a mold from the master template previously manufactured. Since the mold is produced 102 using the master template, the mold also includes at least one surface with the predetermined design provided thereon, but with the negative of the predetermined design, that is, with a shape that is complementary to the shape of the predetermined design of the master template.

The method 100 further comprises curing 103 a material in the mold previously produced, in this way the component may be produced. A material such as polyurethane may be cured 103 in the mold. As the mold features the negative of the predetermined design, the material cured within the mold produces the component with the predetermined design provided thereon (as it was provided in the master template).

Figure 2 shows, in a block diagram form, a method 200 in accordance with another embodiment of the invention.

The method 200 comprises manufacturing 201 a master template. The master template is manufactured 201 such that a predetermined design (that the component to be produced should feature) is not provided therein.

The method 200 further comprises applying 202 the predetermined design to the master template, particularly the predetermined design is applied 202 to at least one surface of the master template. Exemplary processes for applying 202 the predetermined design are laser marking and machining, both of which may provide the predetermined design accurately so that very detailed designs may also be included on the component.

The method 200 further comprises producing 102 a mold from the master template once the later has been applied the predetermined design thereto. The mold produced features a negative of the predetermined design in at least one surface of the mold.

Further, the method 200 also comprises curing 103 a material in the mold thereby producing the component for a lighting device of a motor vehicle with the predetermined design provided therein.

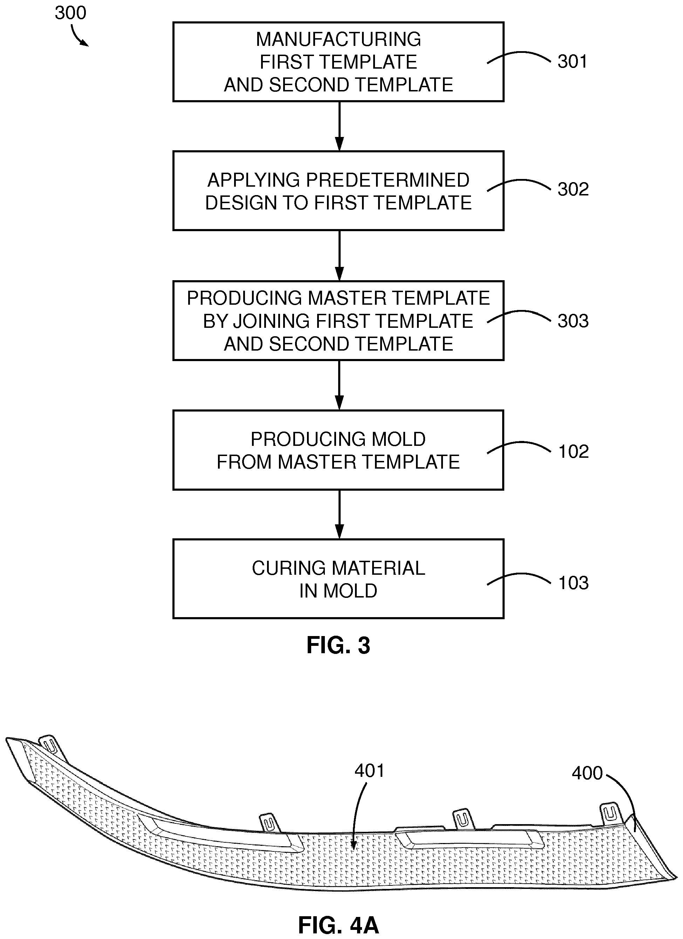

Figure 3 shows, in a block diagram form, a method 300 in accordance with another embodiment of the invention.

The method 300 comprises manufacturing 301 a first template and a second template, both of which will be used for producing a master template. The first template and the second template correspond to different parts or portions of the component to be produced. Each of the first and second templates may be manufactured 301 with a different manufacturing process (e.g. milling, stereolithography, etc.); moreover, each of the first and second templates may comprise a different material (e.g. the first template may comprise a first polymer and the second template may comprise a second polymer, the first template may comprise a first alloy and the second template may comprise a second alloy, the first template may comprise an alloy and the second template may comprise a polymer, etc.). Producing a master template from both a first template and a second template may be convenient when the component that is produced with the method 300 comprises the predetermined design only in part or a portion of the component (in at least one surface thereof).

Further, the method 300 comprises applying 302 the predetermined design to the first template in at least one surface thereof, namely, the predetermined design is provided on the at least one surface of the first template once the first template has been manufactured. In some other embodiments not illustrated herein, the first template is manufactured with the predetermined design already included in at least one of its surfaces and thus it is not necessary to further provide the predetermined design on it.

The method 300 further comprises producing the master template by joining 303 the first template together with the second template. Both templates may be joined with any means known in the art, for example clips, adhesive, etc.

The method 300 further comprises producing 102 a mold from the master template, and curing 103 a material in the mold so as to produce the component with the predetermined design provided therein.

Figure 4A shows a master template 400 for producing a component for a lighting device of a motor vehicle. The component to be produced using the master template 400 is a bezel for the lighting device.

The master template 400 comprises a predetermined design 401 applied to one of the surfaces thereof. The predetermined design 401 includes a discontinuous V-shaped pattern with relief.

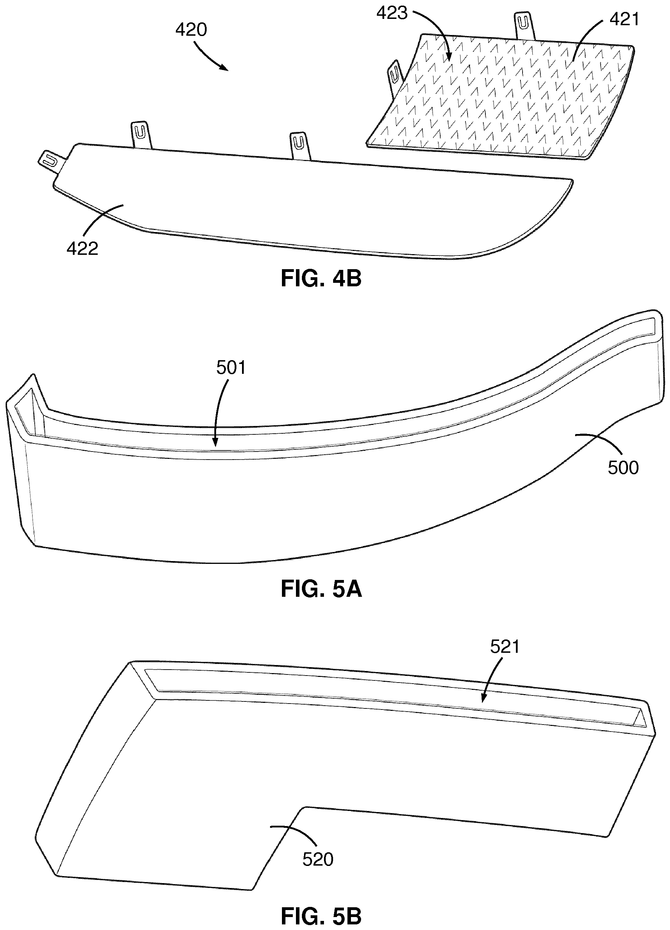

Figure 4B shows a first template 421 and a second template 422 that upon being joined together (in Figure 4B the first template 421 and the second template 422 are illustrated prior to being joined together) form a master template 420. The master template 420 corresponds to a component for a lighting device of a motor vehicle such as a cover for the lighting device.

The first template 421 comprises a predetermined design 423 applied to one surface thereof. The predetermined design 423 is a discontinuous pattern that includes a plurality of differently-sized chevrons with relief. The second template 422 has no design applied thereto, therefore both the material that it is made from and the manufacturing process used may be different to the ones of the first template 421 so as to reduce the cost of the component production for example.

Figure 5A shows a mold 500 that is produced from the master template 400 of Figure 4A.

The mold 500 may receive, in a cavity 501, a material to be cured so as to produce a component for a lighting device of a motor vehicle. The mold 500 features a negative of the predetermined design 401 (not illustrated since it is in an inner surface of the mold 500, that is, a surface delimiting the cavity 501) of the master template 400 so that, upon curing a material within the mold 500, the component produced may feature the predetermined design 401. Further, the mold 500 corresponds to the master template 400 upside down, that is, the upper part of the master template 400 (as illustrated in Figure 4A) is at the bottom part of the mold 500 (as illustrated in Figure 5A): this may be convenient for producing some of the protruded and recessed portions of the master template 400 directly by curing the material in the cavity 501; it is readily apparent that other variations of the mold 500 that also permit the production of the same component are possible as well without departing from the scope of the present disclosure.

Figure 5B shows a mold 520 that is produced from the master template 420 (formed by joining together the first template 421 and the second template 422) of Figure 4B.

The mold 520 comprises a cavity 521 where a material may be cured for producing a component for a lighting device of a motor vehicle. The mold 520 also comprises the predetermined design 423 in at least one surface thereof (not illustrated since it is an inner surface, that is, a surface delimiting the cavity 521) but as a negative of the predetermined design 423. The mold 520 corresponds to the master template 420 upside down.

In the context of the present disclosure, the term 'master' of 'master template' only denotes that it is the template used for producing the mold. Further, even though the terms first and second have been used herein to describe a first template and a second template, it will be understood that the templates should not be limited by these terms since the terms are only used to distinguish one template from another. For example, the first template could as well be named second template and the second template could be named first template without departing from the scope of this disclosure; similarly, the second template could be named third template, the first template could be named second template, and the master template could be named first template without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Method (100, 200, 300) for producing a component for a lighting device of a motor vehicle, the component comprising at least one surface with a predetermined design (401, 423) provided thereon, the method (100, 200, 300) comprising:
manufacturing (101) a master template (400, 420), the master template (400, 420) comprising at least one surface with the predetermined design (401, 423) provided thereon;
producing (102) a mold (500, 520) from the master template (400, 420); and
curing (103) a material in the mold (500, 520) thereby producing the component for the lighting device, the component comprising the at least one surface with the predetermined design (401, 423) provided thereon.

2. Method (100, 200, 300) according to claim 1, wherein the predetermined design (401, 423) provided on the at least one surface of the master template (400, 420) comprises one of: at least one protrusion, at least one recess, and a combination thereof.

3. Method (100, 200, 300) according to any of claims 1-2, wherein the predetermined design (401, 423) provided on the at least one surface of the master template (400, 420) comprises one of: a plurality of prisms, a plurality of pillows, a grained surface, and a combination thereof.

4. Method (300) according to any of claims 1-3, wherein manufacturing (101) the master template (400, 420) comprises:
manufacturing (301) a first template (421) and a second template (422);
providing (302) the predetermined design (401, 423) on at least one surface of the first template (421); and
joining (303) together the first template (421) and the second template (422) thereby producing the master template (420).

5. Method (300) according to claim 4, wherein the first template (421) and the second template (422) are manufactured with different manufacturing processes.

6. Method (200) according to any of claims 1-3, wherein manufacturing (101) the master template (400, 420) comprises:
manufacturing (201) the master template (400, 420); and
providing (202) the predetermined design (401, 423) on the at least one surface of the master template (400, 420).

7. Method (200, 300) according to any of claims 4-6, wherein providing (202) the predetermined design (401, 423) on the at least one surface comprises machining or laser marking the predetermined design (401, 423) in the at least one surface.

8. Method (100, 200, 300) according to any of claims 1-7, wherein the component is one of: a lamp housing, a lamp cover, a lens, a screen, a bezel, and a filter.

9. Method (100, 200, 300) according to any of claims 1-8, wherein the component is a decorative component for the lighting device.

10. Method (100, 200, 300) according to any of claims 1-9, wherein the master template (400, 420) comprises a metallic material or a plastic material.

11. Method (100, 200, 300) according to any of claims 1-10, wherein the mold (500, 520) is a flexible mold, and preferably comprises silicone.

12. Method (100, 200, 300) according to any of claims 1-11, wherein the material cured comprises polyurethane.

13. Component for a lighting device of a motor vehicle obtained with a method according to any of claims 1-12.

14. Component according to claim 13, wherein the component is one of: a lamp housing, a lamp cover, a lens, a screen, a bezel, and a filter.

15. A lighting device for a motor vehicle comprising a light source and a component according to any of claims 13-14.
